# EUROPEAN PATENT SPECIFICATION

(11) **EP 4 160 002 B1**
(45) Date of publication and mention of the grant of the patent: **24.04.2024**
(21) Application number: 21199951.1
(22) Date of filing: 29.09.2021
(51) Int. Cl.: F03D 1/04

(54) **WIND TURBINE WITH SHROUD**
WINDTURBINE MIT DEFLEKTORVERKLEIDUNG
ÉOLIENNE AVEC DÉFLECTEUR

(43) Date of publication of application: 05.04.2023
(73) Proprietor: Ventum Dynamics AS, 4033 Stavanger (NO)
(72) Inventor: URHEIM, Lars, 4010 Stavanger (NO); DAVID, Jeshua John, 4019 Stavanger (NO); PARVEZ, Omer, 4019 Stavanger (NO); CHEVURI, Rishyank, 4019 Stavanger (NO)
(74) Representative: Brann AB

(56) References cited:
- EP-A1- 2 762 719
- EP-A1- 3 219 978
- EP-A1- 3 564 525
- FR-A1- 2 986 282
- US-A1- 2008 023 964

## Description

### TECHNICAL FIELD

The present invention relates generally to wind-based production of electric energy. Especially, the invention relates to a wind turbine according to the preamble of claim 1.

### BACKGROUND

Today, wind power, i.e. the use of wind to provide mechanical power, which, in turn, causes generators to produce electric power is an increasingly important source of energy. Namely, wind power is a sustainable and renewable source of energy having an impact on the environment, which is much smaller than for example that of fossil fuels.

Since wind power is an intermittent energy source that cannot be dispatched on demand, for efficiency it is key that wind from as many directions as possible can be utilized to generate power. Therefore, the omnidirectional wind turbine provides an interesting design alternative. The 360-degree wind intake of the omnidirectional wind turbine removes the need of placing the wind turbine in windward facing direction, which is especially beneficial urban environments where the direction and velocity of wind changes rapidly. The omnidirectional wind turbine also eliminates the need for expensive and maintenance prone gears for yaw mechanism translating to less maintenance over the course of operation compared to traditional wind turbines.

US 2008/0023964 describes an omnidirectional, vertical discharge wind turbine, consisting of a shroud that captures wind from any direction and directs it to flow vertically through a throat section where an airfoil multi-bladed rotor is mounted. The rotor shaft is connected to an electrical power generator. The intake of the shroud incorporates multiple horizontally curved blades of toroidal form varying up to nearly twice the size of the rotor diameter, stacked, staggered and secured in place by multiple aerodynamic vertical walls in the radial direction, to form a central collection chamber for wind. The blade curving angles and the stacking arrangement are such that while accelerating and focusing the wind, across the full swept area of the rotor blades, the loss of air from the central collection chamber is significantly reduced by air flow forming a fluid dynamic gate across inactive faces. Utilizing a wedge and collar near the open top discharge the free wind stream flowing across the open top assists in increasing the flow of air through the rotor. With the increased extraction and wider operational envelop, the energy produced per annum of this omnidirectional shrouded vertical wind turbine is anticipated to be much higher than that of a standard free wind turbine of same rotor diameter.

DE 10 2011 108 993 discloses a wind power plant having a wind turbine that is mounted to a rotor shaft. The rotor shaft is connected with a generating unit and a transducer for electrical current, or other form of energy. A repeller is arranged vertically with respect to rotor shaft. Wind deflection plates are arranged above the wind turbine so as to deflect a horizontal wind flow vertically downward toward the wind turbine air flow. A flow derivative ring is provided next to the repeller, which flow derivative ring is made of metal, wood or plastic. Examples of prior art solutions are also available in document FR2986282.

Thus, different types of omnidirectional wind turbines are known. However, these designs have room for improvement in terms of efficiency and cost effectiveness.

### SUMMARY

The object of the present invention is therefore to offer a solution that mitigates the above problems and provides an efficient and economical wind-based production of electric energy.

According to one aspect of the invention, the object is achieved by a wind turbine for generating electric energy containing a shroud structure, a rotor and a generator. The a shroud structure is rotationally symmetric with respect to a symmetry axis. The shroud structure, in turn, contains a set of stacked concentric blade rings encircling an accumulation chamber. The shroud structure is configured to receive air omnidirectionally in directions transverse to the symmetry axis, and expel air into the accumulation chamber to form an airflow therein towards an output end of the accumulation chamber, such that the airflow exiting the accumulation chamber is essentially parallel to the symmetry axis. Each of the blade rings has inner and outer rims, where an inner opening is delimited by the inner rim. The inner openings of the blade rings have different diameters and the blade rings are arranged with their inner openings staggered relative to one another so that ejection spacings for expelling air into the accumulation chamber are formed between the inner rims of the blade rings in the set of stacked concentric blade rings. Each of the blade rings either has an unbroken cross-sectional profile or a truncated cross-sectional profile. The unbroken cross-sectional profile has such a shape that a tangent thereto is parallel to the symmetry axis at the inner rim. The truncated cross-sectional profile has such a shape that the tangent thereto has an acute angle to the symmetry axis at the inner rim. However, an extrapolated cross-sectional profile representing an extension of the truncated cross-sectional profile to a virtual inner rim is such that the tangent thereto is parallel to the symmetry axis. Further, the unbroken or truncated cross-sectional profiles are such that projections of the inner rims and the virtual inner rims respectively in the form of concentric circles onto a plane orthogonal to the symmetry axis have such projection diameters that a respective area between two neighboring circles of the concentric circles each has a first size. The rotor is arranged in the output end of the accumulation chamber. The rotor has a rotation axis parallel to the symmetry axis, and rotor is configured to be driven by the airflow in the accumulation chamber exiting via the output end. The generator is mechanically connected to the rotor and is configured to generate the electric energy in response to rotation of the rotor.

This wind turbine is advantageous because the specified equal-sized areas of the ejection spacings with respect to their projections in the plane orthogonal to the symmetry axis provide especially high efficiency.

The possibility of including one or more truncated blade rings in the shroud structure further allows for a comparatively light-weight and low-cost design.

Moreover, the proposed wind turbine is advantageous because it is well suited to be arranged with the rotor on top of the shroud structure, i.e. so that the airflow exits the accumulation chamber upwards. Namely, in contrast to locating the rotor below the shroud structure, such an arrangement is beneficial from an air-pressure point-of-view.

According to one embodiment of the invention, the wind turbine further contains a cone-shaped base member that is arranged nearest a first blade ring in the set of stacked concentric blade rings. The first blade ring is located in an opposite end of the accumulation chamber relative to the output end. A first circle represents a projection of the inner rim of the first blade ring onto the plane orthogonal to the symmetry axis. The first circle has such a diameter that an area covered thereby in the plane orthogonal to the symmetry axis has the first size. Analogous to the above, this dimensioning of the first blade ring renders the design efficient in terms of the amount of energy possible to produce by the wind turbine.

According to another embodiment of the invention, the cone-shaped base member is arranged such that all parts thereof are located further away from the output end than the inner rim of a second blade ring adjoining the first blade ring, if the second blade ring has an unbroken cross-sectional profile; or further away from the output end than the virtual inner rim of second first blade ring, if the second blade ring has a truncated cross-sectional profile. Thereby, the cone-shaped base member and the first and second blade rings will cooperate in an efficient manner to pull air into the accumulation chamber and thus propel this air towards the rotor. According to yet another embodiment of the invention, the outer rims of the blade rings in the set of stacked concentric blade rings have the same diameter. Consequently, the blade rings located further away from the rotor may have wider cross-section profiles than the blade rings located closer to the rotor. As a result, the more distant blade rings will expel air at a somewhat higher speed than the nearer blade rings, which will cause favorable combinatory airflow effects in the accumulation chamber.

Preferably, intake slits are formed between the outer rims of consecutive blade rings in the set of stacked concentric blade rings, which intake slits are configured to receive the air to be fed into the accumulation chamber.

According to still another embodiment of the invention, the blade rings in the set of stacked concentric blade rings are arranged so that a distance between the outer rims of consecutive blade rings is equal for all the blade rings in the set of stacked concentric blade rings. Namely, this combines advantageously with the above-mentioned equal-sized areas of the ejection spacings. According to an additional embodiment of this aspect of the invention, a base intake slit is formed between the outer rim of the first blade ring and the cone-shaped base member. Here, a distance between the outer rim of the first blade ring and the cone-shaped base member has the same measure as the equal distance between the consecutive outer rims of the blade rings in the set of stacked concentric blade rings. Analogous to the above, this combines advantageously with the above-mentioned equal-sized areas of the ejection spacings.

According to the invention, the wind turbine contains at least one support member extending radially between the symmetry axis and an outer side of the shroud structure. The blade rings in the set of stacked concentric blade rings are attached to the at least one support member. Thus, the blade rings may be conveniently arranged in the desired configuration in the shroud structure.

Preferably, the least one support member also carries the rotor and the generator. It is further advantageous if the generator is collocated with and directly connected to the rotor because this renders the design compact and reduces the transmission losses.

According to the invention, the at least one support member includes adjustable fixtures configured to allow the blade rings to be attached to the at least one support member at different distances from the cone-shaped base member, so as to enable variation of a position at which each blade ring is placed along a dimension parallel to the symmetry axis. In other words, the shroud structure can be tailored, for example to adapt to local wind conditions.

According to yet another embodiment of the invention, the adjustable fixtures are distributed along the at least one support member to allow a number of blade rings included in the set of stacked concentric blade rings to be varied. Consequently, the shroud structure can be scaled up or down depending on the capacity demands.

According to still another embodiment of the invention, the wind turbine further includes a diffuser ring, which is arranged in the output end of the accumulation chamber downstream of the rotor relative to a direction of the airflow exiting from the accumulation chamber, and which diffuser ring is configured to generate a low-pressure zone outside of the wind turbine. Thereby, the diffuser ring assists in providing a strong airflow through the rotor. According to a further embodiment of the invention, each of the blade rings in the set of stacked concentric blade rings has a cross-section profile that is either uniform or shaped according to airfoil profile. The former is advantageous from a material- and production-cost perspective, whereas the latter is beneficial with respect to efficiency.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: shows a perspective view of the wind turbine according to a first embodiment of the invention;
- Figure 2: shows a top view of the wind turbine according to the first embodiment of the invention;
- Figure 3: exemplifies design of a blade ring according to one embodiment of the invention;
- Figure 4: illustrates the shroud structure according to the first embodiment of the invention in a crosssectional view; and
- Figure 5: shows a perspective cross-sectional view of the shroud structure according to a second embodiment of the invention.

### DETAILED DESCRIPTION

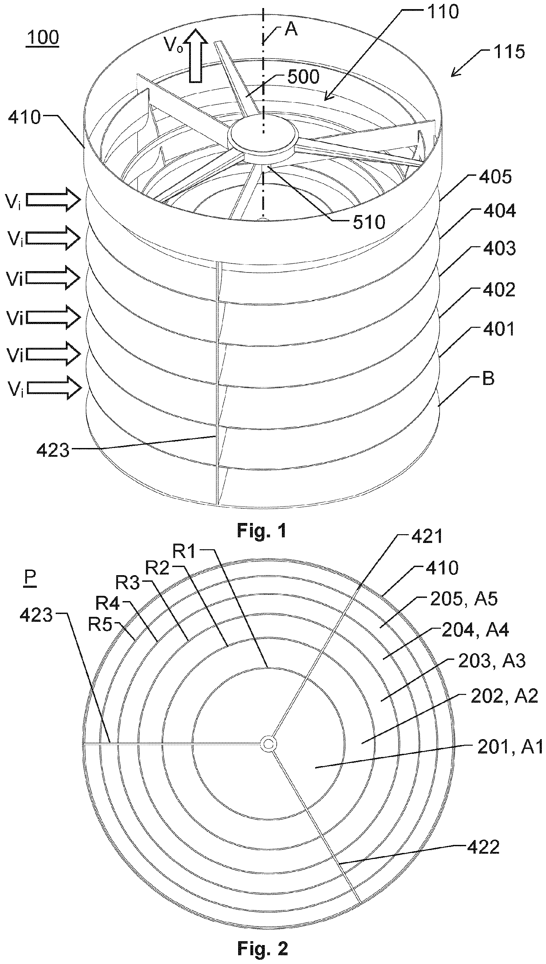

In Figure 1, we see a perspective view of the wind turbine according to a first embodiment of the invention. The wind turbine includes a shroud structure 100, a rotor 500 and a generator 510.

The shroud structure is rotationally symmetric with respect to a symmetry axis A. The shroud structure 100, in turn, includes a set of stacked concentric blade rings 401, 402, 403, 404 and 405 respectively encircling an accumulation chamber 110.

The shroud structure 100 is configured to receive air Vᵢ omnidirectionally in directions transverse to the symmetry axis A. The shroud structure 100 is further configured to expel the received air into the accumulation chamber 110 to form an airflow therein towards an output end 115 of the accumulation chamber 110 being essentially perpendicular to the directions in which the Vᵢ air is received.

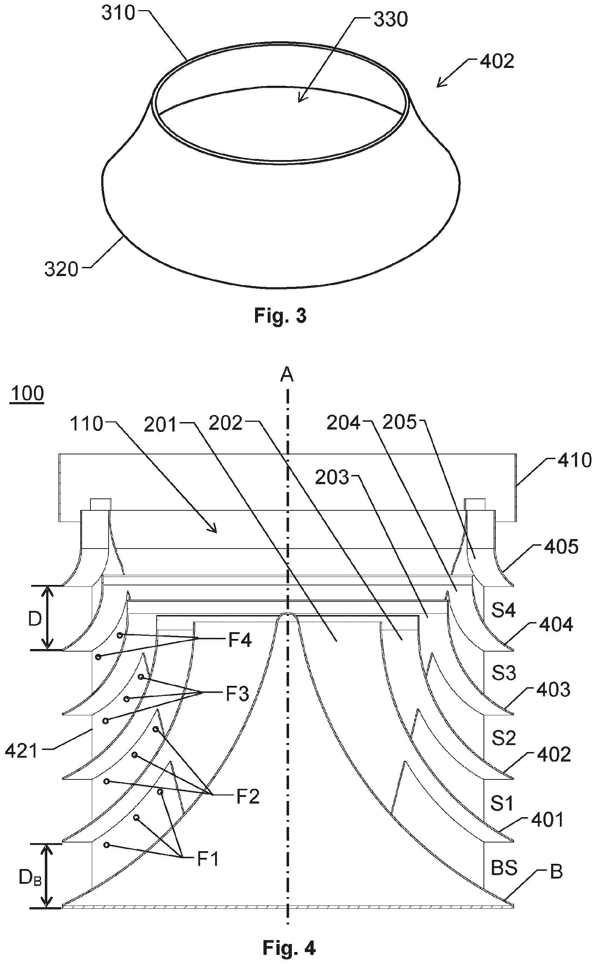

Referring now to Figure 3, each of the blade rings, of which 402 is exemplified in Figure 3, has inner rim 310 and an outer rim 320, Here, an inner opening 330 of the blade ring 402 is delimited by the inner rim 310. The inner openings 330 of the blade rings 401, 402, 403, 404 and 405 have different diameters, for example ranging from 55 percent to 96 percent of a diameter of the rotor 500. The blade rings 401, 402, 403, 404 and 405 are arranged with their inner openings 330 staggered relative to one another, so that ejection spacings for expelling air into the accumulation chamber 110 are formed between the inner rims 310 of the blade rings in the set of stacked concentric blade rings. The cross-sectional view of Figure 4 illustrates the ejection spacings by reference numerals 202, 203, 204 and 205 respectively.

The multiple passage of air provided by the ejection spacings creates a funnel effect on the air entering near the outer rims 320 of the blade rings and leaving the inner rims 310 causing the air between these passages to accelerate and exiting into the accumulation chamber 110 at a higher velocity. This funnel effect also decreases the pressure of the wind. Consequently, the funnel effect helps sucking in a larger volume of air from the surroundings into the accumulation chamber 110 providing greater energy potential for the wind turbine. The funneling area between the blade rings 401, 402, 403, 404 and 405 may be varied by increasing or decreasing the vertical inlet spacing between the blade rings 401, 402, 403, 404 and 405.

According to the invention, one or more of the blade rings may have an unbroken cross-sectional profile as illustrated in Figure 4. This means that a tangent to the cross-sectional profile is parallel to the symmetry axis A at the inner rim 310, as is the case for all the blade rings 401, 402, 403, 404 and 405 in Figure 4.

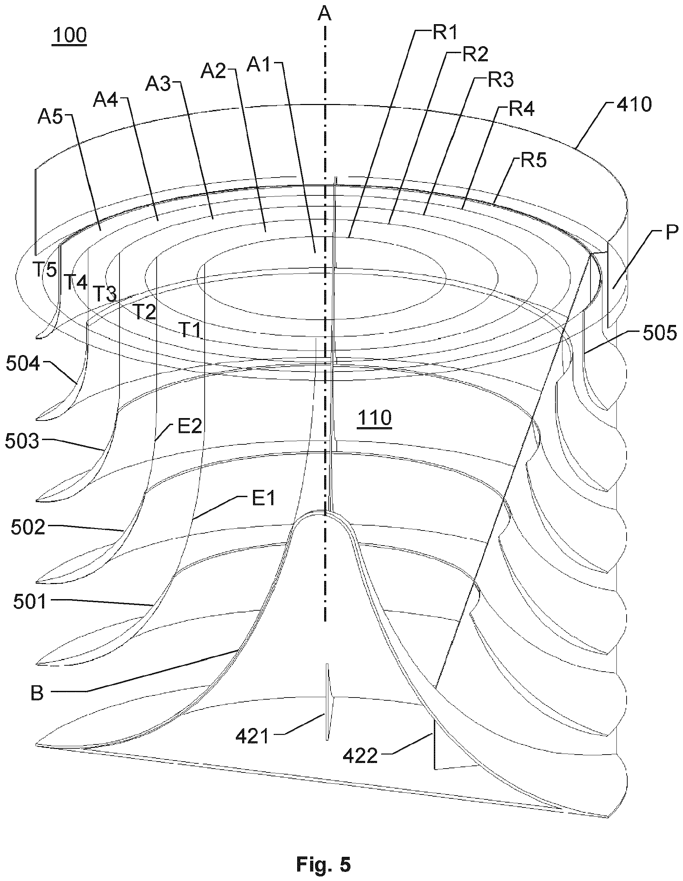

Alternatively, or additionally, according to the invention, one or more of the blade rings may a truncated cross-sectional profile as illustrated by reference numerals 501 and 502 in Figure 5. This means that the tangent to the cross-sectional profile has an acute angle to the symmetry axis A at the inner rim 310. However, at a respective virtual inner rim of the truncated cross-sectional profiles 501 and 502, which virtual inner rims represent extrapolated cross-sectional profiles E1 and E2 of the truncated cross-sectional profiles 501 and 502, each of the tangents T1 and T2 to the cross-sectional profile 501 and 502 respectively is parallel to the symmetry axis A.

As is shown in the Figures 4 and 5, the accumulation chamber 110 has an overall conical shape in an end thereof opposite to the output end 115. This conical shape preferably extends along approximately 45 percent of an entire length of the shroud structure 100. The conical-shape the accumulation chamber 110 is designed to bend the airflow from a flow being essentially perpendicular to the symmetry axis A parallel to a flow being essentially parallel to the symmetry axis A. Said conical-shape is also configured to enable a high coand 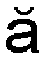 effect through which air attaches with surface and creates a boundary layer directing the air towards the rotor 500.

The blade rings 401, 402, 403, 404, 405, 501, 502, 503, 504 and 505 preferably have smooth sloping surfaces aiding snow and water to slide out from the shroud structure, hence making the design resilient to the elements.

The blade rings 401, 402, 403, 404, 405, 501, 502, 503, 504 and 505 may, for instance, have an angle of attack varying from 0 to 8 degrees, and have exit angle curves from 26 degrees to 90 degrees.

Moreover, referring now also to Figure 2, the unbroken or truncated cross-sectional profiles are such that projections of the inner rims 310 and the virtual inner rims respectively in the form of concentric circles onto a plane P orthogonal to the symmetry axis A have such projection diameters that a respective area between two neighboring circles of the concentric circles each has a first size.

Figure 2 shows the projections of the inner rims 310 of the blade rings 401, 402, 403, 404 and 405 into the plane P as R1, R2, R3, R4 and R5 respectively.

Figure 5 shows the projections of the virtual inner rims of the blade rings 501 and 502 and the inner rims 310 of the blade rings 503, 504 and 505 into the plane P as R1, R2, R3, R4 and R5 respectively.

Each of the unbroken and truncated cross-sectional profiles is such that the projections R1, R2, R3, R4 and R5 onto the plane P have such projection diameters that a respective area A2, A3, A4 and A5 respectively between two neighboring circles of the concentric circles each has a first size. In other words, all the areas A2, A3, A4 and A5 are equally large.

The rotor 500 is arranged in the output end 115 of the accumulation chamber 110. The rotor 500 has a rotation axis parallel to the symmetry axis A, and the rotor 500 is configured to be driven by the airflow Vₒ in the accumulation chamber 110 that exits via the output end 115.

The rotor 500 may contain plural blades, say three, each having an airfoil profile configured to perform well in varying airflow directions, including axial airflow.

The blades of the rotor 500 are designed to extract kinetic energy of the airflow Vₒ in an area swept by the blades of the rotor 500, and thus generate torque. The generated torque is converted into electric power by the generator 510, and the obtained electric power is transmitted using electric power cables to an end user, and/or a power gird.

The generator 510 is mechanically connected to the rotor 500 and is configured to generate electric energy in response to rotation of the rotor 500.

According to embodiments of the invention, the wind turbine contains a cone-shaped base member B as illustrated in Figures 1, 4 and 5.

The cone-shaped base member B is arranged nearest a first blade ring 401 and 501 respectively in the set of stacked concentric blade rings. The first blade ring 401, 501 is located in an opposite end of the accumulation chamber 110 relative to the output end 115. For example, if the shroud structure 100 is oriented vertically with the output end 115 pointing up, the cone-shaped base member B is positioned at the bottom of the shroud structure 100.

In any case, a first circle represents a projection R1 of the inner rim 310 of the first blade ring 401, and the virtual inner rim of the first blade ring 501 respectively, onto the plane P. The first circle has such a diameter that an area A1 covered thereby in the plane P also has the first size. I.e. the area A1 equals each of the above areas A2, A3, A4 and A5.

Preferably, to accomplish an efficient feeding of air into the accumulation chamber 110, the cone-shaped base member B is arranged such that all parts thereof are located further away from the output end 115 than the inner rim 310 of a second blade ring 402 adjoining the first blade ring 401, if the second blade ring 402 has an unbroken cross-sectional profile. This is illustrated in Figure 4.

If, however, the second blade ring 502 has a truncated cross-sectional profile, as shown in Figure 5, the cone-shaped base member B is preferably arranged such that all parts thereof are located further away from the output end 115 than the virtual inner rim of the second blade ring 502.

According to embodiments of the invention, the outer rims 320 of the blade rings in the set of stacked concentric blade rings 401, 402, 403, 404, 405, 501, 502, 503, 504 and 505 all have the same diameter, so that the shroud structure 100 attains an overall cylindrical outline. As a result, the blade rings located relatively distant from the rotor 500 may expel air into the accumulation chamber 110 at a somewhat higher speed the blade rings located relatively close to the rotor 500. This, in turn, causes favorable combinatory airflow effects in the accumulation chamber, which improves the efficiency of the wind turbine.

Preferably, the shroud structure 100 is configured to receive the air Vᵢ to be expelled into the accumulation chamber 110 via intake slits S1, S2, S3 and S4 formed between the outer rims 320 of consecutive blade rings 401, 402, 403, 404 and 405 respectively in the set of stacked concentric blade rings, for instance as illustrated in Figure 4.

Figure 4 also illustrates one embodiment of the invention wherein the blade rings 401, 402, 403, 404 and 405 in the set of stacked concentric blade rings are equidistant. In other words, the blade rings 401, 402, 403, 404 and 405 are arranged so that a distance D between the outer rims 320 of consecutive blade rings is equal for all the blade rings in the set of stacked concentric blade rings. This is especially advantageous because the ejection spacings for expelling air into the accumulation chamber 110 have equal-sized areas with respect to the plane P as described above.

Referring further to Figure 4, we see a base intake slit BS formed between the outer rim 320 of the first blade ring 401 and the cone-shaped base member B. Here, a distance D_{B} between the outer rim 320 of the first blade ring 401 and the cone-shaped base member B has the same measure as the equal distance D between the consecutive outer rims 320 of the blade rings 401, 402, 403, 404, and 405 in the set of stacked concentric blade rings.

For stability, and to conveniently arrange the blade rings 401, 402, 403, 404, 405, 501, 502, 503, 504 and 505 relative to one another as described above, the wind turbine preferably includes at least one support member, however further preferably three to six support members, which are exemplified as 421, 422 and 423 respectively in Figures 1, 2, 4 and 5.

Each support member 421, 422 and 423 extends radially between the symmetry axis A and an outer side of the shroud structure 100. The blade rings 401, 402, 403, 404, 405, 501, 502, 503, 504 and 505 are attached to the at least one support member 421, 422 and 423, for example via adjustable fixtures F1, F2, F3, F4 configured to allow the blade rings to be attached to the at least one support member 421, 422 and 423) at different distances from the cone-shaped base member B. This enables convenient adaptation to different wind conditions.

Alternatively, or additionally, the adjustable fixtures F1, F2, F3 and F4 may be distributed along the at least one support member 421, 422 and 423 to allow a number of blade rings included in the set of stacked concentric blade rings to be varied. This modular approach makes it possible to upscale or downscale the capacity of the wind turbine on demand.

It is advantageous if the least one support member 421, 422 and 423 carries the rotor 500 and the generator 510. According to embodiments of the invention, for mechanical efficiency, the generator 510 is collocated with and directly connected to the rotor 500.

Referring now to Figures 1, 2, 4 and 5, to ensure ample airflow through the shroud structure 100 and pass the rotor, the wind turbine may include a diffuser ring 410, which is configured to generate a low-pressure zone outside of the wind turbine. The low-pressure zone receives the airflow Vₒ exiting from the accumulation chamber 110, and thus improves the throughput of air. The diffuser ring 410 is arranged in the output end 115 of the accumulation chamber 110 downstream of the rotor 500 relative to a direction of the airflow Vₒ exiting from the accumulation chamber 110.

The diffuser ring 410 may completely enclose the rotor 500 with as little as possible larger diameter to reduce blade tip turbulence.

The diffuser ring 410 reduces energy loss due to tip turbulence from the rotor's 500 blades. The diffuser ring 410 also acts as a noise damper to eliminate whistling noise produced by the tips of the rotor's 500 blades when high velocity wind passes through it during rotation.

Additionally, the diffuser ring 410 ensures that no parts of the rotor 500 reaches outside the wind turbine in the event of failure, or and that an individual comes into contact with the blades of the rotor 500 during operation.

Figure 4 illustrates one embodiment of the invention, wherein each of the blade rings in the set of stacked concentric blade rings 401, 402, 403, 404 and 405 has a uniform cross-section profile, i.e. the blade rings have the same thickness along the entire profile.

Figure 5 illustrates another embodiment of the invention, wherein the blade rings 501, 502, 503, 504 and 505 in the set of stacked concentric blade rings has an airfoil profile, i.e. a thickness that varies along the profile.

Variations to the disclosed embodiments can be understood and effected by those skilled in the art in practicing the claimed invention, from a study of the drawings, the disclosure, and the appended claims.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

The scope of protection is defined by the appended claims.

## Claims

1. A wind turbine for generating electric energy, comprising:
a shroud structure (100) being rotationally symmetric with respect to a symmetry axis (A), which shroud structure (100):
comprises a set of stacked concentric blade rings (401, 402, 403, 404, 405, 501, 502, 503, 504, 505) encircling an accumulation chamber (110), and
is configured to receive air (Vᵢ) omnidirectionally in directions transverse to the symmetry axis (A) and expel air into the accumulation chamber (110) to form an airflow therein towards an output end (115) of the accumulation chamber (110), each of the blade rings having inner and outer rims (310; 320), where an inner opening (330) is delimited by the inner rim (310), the inner openings (330) of the blade rings having different diameters and the blade rings being arranged with their inner openings (330) staggered relative to one another so that ejection spacings (202, 203, 204, 205) for expelling air into the accumulation chamber (110) are formed between the inner rims (310) of the blade rings in the set of stacked concentric blade rings;
a rotor (500) arranged in the output end (115) of the accumulation chamber (110), which rotor (500) has a rotation axis parallel to the symmetry axis (A) and which rotor (500) is configured to be driven by the airflow (Vₒ) in the accumulation chamber (110) exiting via the output end (115); and
a generator (510) mechanically connected to the rotor (500) and configured to generate the electric energy in response to rotation of the rotor (500),
wherein each of the blade rings either has
an unbroken cross-sectional profile (401, 402, 403, 404, 405, 503, 504, 505) where a tangent (T3, T4, T5) thereto is parallel to the symmetry axis (A) at the inner rim (310), or
a truncated cross-sectional profile (501, 502) where the tangent thereto has an acute angle to the symmetry axis (A) at the inner rim (310), an extrapolated cross-sectional profile (E1, E2) representing an extension of the truncated cross-sectional profile (501, 502) to a virtual inner rim where the tangent (T1, T2) thereto is parallel to the symmetry axis (A), and
the unbroken or truncated cross-sectional profiles are such that projections (R1, R2, R3, R4, R5) of the inner rims (310) and the virtual inner rims respectively in the form of concentric circles onto a plane (P) orthogonal to the symmetry axis (A) have such projection diameters that a respective area (A2, A3, A4, A5) between two neighboring circles of the concentric circles each has a first size,
wherein the wind turbine comprises at least one support member (421, 422, 423) extending radially between the symmetry axis (A) and an outer side of the shroud structure (100), and the blade rings (401, 402, 403, 404, 405, 501, 502, 503, 504, 505) in the set of stacked concentric blade rings being attached to the at least one support member (421, 422, 423), **characterized in that** the at least one support member (421, 422, 423) comprises adjustable fixtures (F1, F2, F3, F4) configured to allow the blade rings (401, 402, 403, 404, 405) to be attached to the at least one support member (421, 422, 423) at different distances from the cone-shaped base member (B) so as to enable variation of a position of each of the blade rings (401, 402, 403, 404, 405) along a dimension being parallel to the symmetry axis (A).

2. The wind turbine according to claim 1, further comprising a cone-shaped base member (B) arranged nearest a first blade ring (401; 501) in the set of stacked concentric blade rings, which first blade ring (401; 501) is located in an opposite end of the accumulation chamber (110) relative to the output end (115), a first circle representing a projection (R1) of the inner rim (310) of the first blade ring (401; 501) onto the plane (P), and the first circle has such a diameter that an area (A1) covered thereby in the plane (P) has the first size.

3. The wind turbine according to claim 2, wherein the cone-shaped base member (B) is arranged such that all parts thereof are located further away from the output end (115):
than the inner rim (310) of a second blade ring (402) adjoining the first blade ring (401) if the second blade ring (402) has an unbroken cross-sectional profile, or
than the virtual inner rim of the second blade ring (502) if the second blade ring (502) has a truncated cross-sectional profile.

4. The wind turbine according to any one of the preceding claims, wherein the outer rims (320) of the blade rings in the set of stacked concentric blade rings (401, 402, 403, 404, 405, 501, 502, 503, 504, 505) have the same diameter.

5. The wind turbine according to any one of the preceding claims, wherein the shroud structure (100) is configured to receive the air (Vᵢ) via intake slits (S1, S2, S3, S4) formed between the outer rims (320) of consecutive blade rings (401, 402, 403, 404, 405, 501, 502, 503, 504, 505) in the set of stacked concentric blade rings.

6. The wind turbine according to claim 5, wherein the blade rings (401, 402, 403, 404, 405, 501, 502, 503, 504, 505) in the set of stacked concentric blade rings are arranged so that a distance (D) between the outer rims (320) of consecutive blade rings is equal for all the blade rings in the set of stacked concentric blade rings.

7. The wind turbine according to claim 6, wherein a base intake slit (BS) is formed between the outer rim (320) of the first blade ring (401) and the cone-shaped base member (B), and a distance (D_{B}) between the outer rim (320) of the first blade ring (401) and the cone-shaped base member (B) has the same measure as the equal distance (D) between the consecutive outer rims (320) of the blade rings (401, 402, 403, 404, 405, 501, 502, 503, 504, 505) in the set of stacked concentric blade rings.

8. The wind turbine according to any of the preceding claims, wherein the least one support member (421, 422, 423) carries the rotor (500) and the generator (510).

9. The wind turbine according to claim 8, wherein the generator (510) is collocated with and directly connected to the rotor (500).

10. The wind turbine according to any of the preceding claims, wherein the adjustable fixtures (F1, F2, F3, F4) are distributed along the at least one support member (421, 422, 423) to allow a number of blade rings included in the set of stacked concentric blade rings to be varied.

11. The wind turbine according to any one of the preceding claims, comprising a diffuser ring (410) configured to generate a low-pressure zone outside of the wind turbine, which low-pressure zone receives the airflow (Vₒ) exiting from the accumulation chamber (110), and the diffuser ring (410) is arranged in the output end (115) of the accumulation chamber (110) downstream of the rotor (500) relative to a direction of the airflow (Vₒ) exiting from the accumulation chamber (110).

12. The wind turbine according to any one of the preceding claims, wherein each of the blade rings in the set of stacked concentric blade rings has a cross-section profile being either uniform (401, 402, 403, 404, 405) or shaped according to airfoil profile (501, 502, 503, 504, 505).

## Patentansprüche

1. Windturbine zum Erzeugen elektrischer Energie, umfassend:
eine Abdeckungsstruktur (100), die in Bezug auf eine Symmetrieachse (A) drehsymmetrisch ist, wobei die Abdeckungsstruktur (100):
einen Satz von gestapelten konzentrischen Schaufelringen (401, 402, 403, 404, 405, 501, 502, 503, 504, 505) umfasst, der eine Akkumulationskammer (110) umschließt, und
dazu konfiguriert ist, Luft (Vᵢ) omnidirektional in Richtungen quer zu der Symmetrieachse (A) aufzunehmen und Luft in die Akkumulationskammer (110) auszustoßen, um darin einen Luftstrom in Richtung eines Ausgangsendes (115) der Akkumulationskammer (110) zu bilden, wobei jeder der Schaufelringe einen inneren und einen äußeren Rand (310; 320) aufweist, wobei eine innere Öffnung (330) durch den inneren Rand (310) begrenzt ist, wobei die inneren Öffnungen (330) der Schaufelringe unterschiedliche Durchmesser aufweisen und die Schaufelringe so angeordnet sind, dass ihre inneren Öffnungen (330) relativ zueinander versetzt sind, sodass Ausstoßabstände (202, 203, 204, 205) zum Ausstoßen von Luft in die Akkumulationskammer (110) zwischen den inneren Rändern (310) der Schaufelringe in dem Satz von gestapelten konzentrischen Schaufelringen gebildet sind;
einen Rotor (500), der in dem Ausgangsende (115) der Akkumulationskammer (110) angeordnet ist, wobei der Rotor (500) eine Drehachse parallel zu der Symmetrieachse (A) aufweist und wobei der Rotor (500) dazu konfiguriert ist, durch den Luftstrom (Vₒ) in der Akkumulationskammer (110) angetrieben zu werden, der über das Ausgangsende (115) austritt; und
einen Generator (510), der mechanisch mit dem Rotor (500) verbunden und dazu konfiguriert ist, die elektrische Energie als Reaktion auf eine Drehung des Rotors (500) zu erzeugen, wobei jeder der Schaufelringe entweder Folgendes aufweist:
ein ununterbrochenes Querschnittsprofil (401, 402, 403, 404, 405, 503, 504, 505), wobei eine Tangente (T3, T4, T5) dazu parallel zu der Symmetrieachse (A) an dem inneren Rand (310) verläuft, oder
ein gekürztes Querschnittsprofil (501, 502), wobei die Tangente dazu an dem inneren Rand (310) einen spitzen Winkel zu der Symmetrieachse (A) aufweist, ein extrapoliertes Querschnittsprofil (E1, E2), das eine Erweiterung des gekürzten Querschnittsprofils (501, 502) zu einem virtuellen inneren Rand darstellt, wobei die Tangente (T1, T2) dazu parallel zu der Symmetrieachse (A) verläuft, und
das ununterbrochene oder das gekürzte Querschnittsprofil derart sind, dass Projektionen (R1, R2, R3, R4, R5) der inneren Ränder (310) bzw. der virtuellen inneren Ränder in Form von konzentrischen Kreisen auf eine Ebene (P) orthogonal zu der Symmetrieachse (A) derartige Projektionsdurchmesser aufweisen, dass eine jeweilige Fläche (A2, A3, A4, A5) zwischen zwei benachbarten Kreisen der konzentrischen Kreise jeweils eine erste Größe aufweist,
wobei die Windturbine mindestens ein Trägerelement (421, 422, 423) umfasst, das sich radial zwischen der Symmetrieachse (A) und einer Außenseite der Abdeckungsstruktur (100) erstreckt, und die Schaufelringe (401, 402, 403, 404, 405, 501, 502, 503, 504, 505) in dem Satz von gestapelten konzentrischen Schaufelringen an dem mindestens einen Trägerelement (421, 422, 423) befestigt sind, **dadurch gekennzeichnet, dass**
das mindestens eine Trägerelement (421, 422, 423) einstellbare Halterungen (F1, F2, F3, F4) umfasst, die dazu konfiguriert sind, zu ermöglichen, dass die Schaufelringe (401, 402, 403, 404, 405) an dem mindestens einen Trägerelement (421, 422, 423) in unterschiedlichen Abständen von dem kegelförmigen Basiselement (B) befestigt sind, um eine Variation einer Position von jedem der Schaufelringe (401, 402, 403, 404, 405) entlang einer Abmessung parallel zu der Symmetrieachse (A) zu ermöglichen.

2. Windturbine nach Anspruch 1, ferner umfassend ein kegelförmiges Basiselement (B), das am nächsten zu einem ersten Schaufelring (401; 501) in dem Satz von gestapelten konzentrischen Schaufelringen angeordnet ist, wobei sich der erste Schaufelring (401; 501) in einem gegenüberliegenden Ende der Kammer (110) relativ zu dem Ausgangsende (115) befindet, wobei ein erster Kreis eine Projektion (R1) des inneren Rands (310) des ersten Schaufelrings (401; 501) auf die Ebene (P) darstellt und der erste Kreis einen derartigen Durchmesser aufweist, dass eine Fläche (A1), die dadurch in der Ebene (P) abgedeckt ist, die erste Größe aufweist.

3. Windturbine nach Anspruch 2, wobei das kegelförmige Basiselement (B) derart angeordnet ist, dass sich alle Teile davon weiter entfernt von dem Ausgangsende (115) befinden:
als der innere Rand (310) eines zweiten Schaufelrings (402), der an den ersten Schaufelring (401) angrenzt, wenn der zweite Schaufelring (402) ein ununterbrochenes Querschnittsprofil aufweist, oder
als der virtuelle innere Rand des zweiten Schaufelrings (502), wenn der zweite Schaufelring (502) ein gekürztes Querschnittsprofil aufweist.

4. Windturbine nach einem der vorhergehenden Ansprüche, wobei die äußeren Ränder (320) der Schaufelringe in dem Satz von gestapelten konzentrischen Schaufelringen (401, 402, 403, 404, 405, 501, 502, 503, 504, 505) den gleichen Durchmesser aufweisen.

5. Windturbine nach einem der vorhergehenden Ansprüche, wobei die Abdeckungsstruktur (100) dazu konfiguriert ist, die Luft (Vᵢ) über Einlassschlitze (S1, S2, S3, S4) aufzunehmen, die zwischen den äußeren Rändern (320) von aufeinander folgenden Schaufelringen (401, 402, 403, 404, 405, 501, 502, 503, 504, 505) in dem Satz von gestapelten konzentrischen Schaufelringen gebildet sind.

6. Windturbine nach Anspruch 5, wobei die Schaufelringe (401, 402, 403, 404, 405, 501, 502, 503, 504, 505) in dem Satz von gestapelten konzentrischen Schaufelringen so angeordnet sind, dass ein Abstand (D) zwischen den äußeren Rändern (320) aufeinander folgender Schaufelringe für alle Schaufelringe in dem Satz von gestapelten konzentrischen Schaufelringen gleich ist.

7. Windturbine nach Anspruch 6, wobei ein Basiseinlassschlitz (BS) zwischen dem äußeren Rand (320) des ersten Schaufelrings (401) und dem kegelförmigen Basiselement (B) gebildet ist und ein Abstand (D_{B}) zwischen dem äußeren Rand (320) des ersten Schaufelrings (401) und dem kegelförmigen Basiselement (B) das gleiche Maß aufweist wie der gleiche Abstand (D) zwischen den aufeinander folgenden äußeren Rändern (320) der Schaufelringe (401, 402, 403, 404, 405, 501, 502, 503, 504, 505) in dem Satz von gestapelten konzentrischen Schaufelringen.

8. Windturbine nach einem der vorhergehenden Ansprüche, wobei das mindestens eine Trägerelement (421, 422, 423) den Rotor (500) und den Generator (510) trägt.

9. Windturbine nach Anspruch 8, wobei der Generator (510) gemeinsam mit dem Rotor (500) angeordnet und direkt damit verbunden ist.

10. Windturbine nach einem der vorhergehenden Ansprüche, wobei die einstellbaren Halterungen (F1, F2, F3, F4) entlang des mindestens einen Trägerelements (421, 422, 423) verteilt sind, um zu ermöglichen, dass eine Anzahl von Schaufelringen, die in dem Satz von gestapelten konzentrischen Schaufelringen enthalten ist, zu variieren ist.

11. Windturbine nach einem der vorhergehenden Ansprüche, umfassend einen Diffusorring (410), der dazu konfiguriert ist, eine Niederdruckzone außerhalb der Windturbine zu erzeugen, wobei die Niederdruckzone den aus der Akkumulationskammer (110) austretenden Luftstrom (Vₒ) aufnimmt und der Diffusorring (410) in dem Ausgangsende (115) der Akkumulationskammer (110) stromabwärts des Rotors (500) relativ zu einer Richtung des aus der Akkumulationskammer (110) austretenden Luftstroms (Vₒ) angeordnet ist.

12. Windturbine nach einem der vorhergehenden Ansprüche, wobei jeder der Schaufelringe in dem Satz von gestapelten konzentrischen Schaufelringen ein Querschnittsprofil aufweist, das entweder einheitlich (401, 402, 403, 404, 405) oder gemäß einem aerodynamischen Profil (501, 502, 503, 504, 505) geformt ist.

## Revendications

1. Éolienne pour générer de l'énergie électrique, comprenant :
une structure de carénage (100) symétrique en rotation par rapport à un axe de symétrie (A), laquelle structure de carénage (100) :
comprend un ensemble d'anneaux de pales (401, 402, 403, 404, 405, 501, 502, 503, 504, 505) concentriques empilés encerclant une chambre d'accumulation (110), et
est configurée pour recevoir l'air (Vᵢ) de manière omnidirectionnelle dans des directions transversales par rapport à l'axe de symétrie (A) et expulser l'air dans la chambre d'accumulation (110) pour former un écoulement d'air dans celle-ci vers une extrémité de sortie (115) de la chambre d'accumulation (110), chacun des anneaux de pales présentant des bords intérieur et extérieur (310; 320), où une ouverture intérieure (330) est délimitée par le bord intérieur (310), les ouvertures intérieures (330) des anneaux de pales présentant différents diamètres et les anneaux de pales étant agencés avec leurs ouvertures intérieures (330) en quinconce les unes par rapport aux autres de sorte que des espacements d'éjection (202, 203, 204, 205) pour expulser l'air dans la chambre d'accumulation (110) sont formés entre les bords intérieurs (310) des anneaux de pales dans l'ensemble d'anneaux de pales concentriques empilés ;
un rotor (500) agencé dans l'extrémité de sortie (115) de la chambre d'accumulation (110), lequel rotor (500) présente un axe de rotation parallèle à l'axe de symétrie (A) et lequel rotor (500) est configuré pour être entraîné par l'écoulement d'air (Vₒ) dans la chambre d'accumulation (110) sortant par l'extrémité de sortie (115) ; et
un générateur (510) relié mécaniquement au rotor (500) et configuré pour générer l'énergie électrique en réponse à la rotation du rotor (500),
dans laquelle chacun des anneaux de pales soit présente un profil en section transversale ininterrompu (401, 402, 403, 404, 405, 503, 504, 505) où une tangente (T3, T4, T5) à celui-ci est parallèle à l'axe de symétrie (A) au niveau du bord intérieur (310), ou
un profil en section transversale tronqué (501, 502) où la tangente à celui-ci présente un angle aigu par rapport à l'axe de symétrie (A) au niveau du bord intérieur (310), un profil en section transversale extrapolé (E1, E2) représentant une extension du profil en section transversale tronqué (501, 502) vers un bord intérieur virtuel où la tangente (T1, T2) à celui-ci est parallèle à l'axe de symétrie (A), et
les profils en section transversale ininterrompus ou tronqués sont tels que les projections (R1, R2, R3, R4, R5) des bords intérieurs (310) et des bords intérieurs virtuels respectivement sous la forme de cercles concentriques sur un plan (P) perpendiculaire à l'axe de symétrie (A) présentent de tels diamètres de projection qu'une zone (A2, A3, A4, A5) respective entre deux cercles voisins des cercles concentriques présente chacune une première dimension,
dans laquelle l'éolienne comprend au moins un élément de support (421, 422, 423) s'étendant radialement entre l'axe de symétrie (A) et un côté extérieur de la structure de carénage (100), et les anneaux de pales (401, 402, 403, 404, 405, 501, 502, 503, 504, 505) dans l'ensemble d'anneaux de pales concentriques empilés étant fixés à l'au moins un élément de support (421, 422, 423), **caractérisé en ce que**
l'au moins un élément de support (421, 422, 423) comprend des accessoires ajustables (F1, F2, F3, F4) configurés pour permettre aux anneaux de pales (401, 402, 403, 404, 405) d'être fixés à l'au moins un élément de support (421, 422, 423) à différentes distances de l'élément de base conique (B) de manière à autoriser une variation d'une position de chacun des anneaux de pales (401, 402, 403, 404, 405) le long d'une dimension parallèle à l'axe de symétrie (A).

2. Éolienne selon la revendication 1, comprenant en outre un élément de base conique (B) agencé le plus près d'un premier anneau de pales (401 ; 501) dans l'ensemble d'anneaux de pales concentriques empilés, lequel premier anneau de pales (401; 501) est situé dans une extrémité opposée de la chambre d'accumulation (110) par rapport à l'extrémité de sortie (115), un premier cercle représentant une projection (R1) du bord intérieur (310) du premier anneau de pales (401; 501) sur le plan (P), et le premier cercle présente un tel diamètre qu'une zone (A1) ainsi recouverte dans le plan (P) présente la première dimension.

3. Éolienne selon la revendication 2, dans laquelle l'élément de base conique (B) est agencé de telle sorte que toutes les parties de celui-ci sont situées plus loin de l'extrémité de sortie (115) :
que le bord intérieur (310) d'un deuxième anneau de pales (402) adjacent au premier anneau de pales (401) si le deuxième anneau de pales (402) présente un profil en section transversale ininterrompu, ou
que le bord intérieur virtuel du deuxième anneau de pales (502) si le deuxième anneau de pales (502) présente un profil en section transversale tronqué.

4. Éolienne selon l'une quelconque des revendications précédentes, dans laquelle les bords extérieurs (320) des anneaux de pales dans l'ensemble d'anneaux de pales (401, 402, 403, 404, 405, 501, 502, 503, 504, 505) concentriques empilés présentent le même diamètre.

5. Éolienne selon l'une quelconque des revendications précédentes, dans laquelle la structure de carénage (100) est configurée pour recevoir l'air (Vᵢ) par des fentes d'admission (S1, S2, S3, S4) formées entre les bords extérieurs (320) d'anneaux de pales (401, 402, 403, 404, 405, 501, 502, 503, 504, 505) consécutifs dans l'ensemble d'anneaux de pales concentriques empilés.

6. Éolienne selon la revendication 5, dans laquelle les anneaux de pales (401, 402, 403, 404, 405, 501, 502, 503, 504, 505) dans l'ensemble d'anneaux de pales concentriques empilés sont agencés de sorte qu'une distance (D) entre les bords extérieurs (320) d'anneaux de pales consécutifs est égale pour tous les anneaux de pales dans l'ensemble d'anneaux de pales concentriques empilés.

7. Éolienne selon la revendication 6, dans laquelle une fente d'admission de base (BS) est formée entre le bord extérieur (320) du premier anneau de pales (401) et l'élément de base conique (B), et une distance (D_{B}) entre le bord extérieur (320) du premier anneau de pales (401) et l'élément de base conique (B) présente la même mesure que la distance égale (D) entre les bords extérieurs (320) consécutifs des anneaux de pales (401, 402, 403, 404, 405, 501, 502, 503, 504, 505) dans l'ensemble d'anneaux de pales concentriques empilés.

8. Éolienne selon l'une quelconque des revendications précédentes, dans laquelle l'au moins un élément de support (421, 422, 423) porte le rotor (500) et le générateur (510).

9. Éolienne selon la revendication 8, dans laquelle le générateur (510) est contigu et directement relié au rotor (500).

10. Éolienne selon l'une quelconque des revendications précédentes, dans laquelle les accessoires ajustables (F1, F2, F3, F4) sont distribués le long de l'au moins un élément de support (421, 422, 423) pour permettre à un certain nombre d'anneaux de pales compris dans l'ensemble d'anneaux de pales concentriques empilés d'être modifié.

11. Éolienne selon l'une quelconque des revendications précédentes, comprenant un anneau de diffuseur (410) configuré pour générer une zone de basse pression à l'extérieur de l'éolienne, laquelle zone de basse pression reçoit l'écoulement d'air (Vₒ) sortant de la chambre d'accumulation (110), et l'anneau de diffuseur (410) est agencé dans l'extrémité de sortie (115) de la chambre d'accumulation (110) en aval du rotor (500) par rapport à une direction de l'écoulement d'air (Vₒ) sortant de la chambre d'accumulation (110).

12. Éolienne selon l'une quelconque des revendications précédentes, dans laquelle chacun des anneaux de pales dans l'ensemble d'anneaux de pales concentriques empilés présente un profil en section transversale soit uniforme (401, 402, 403, 404, 405) soit façonné en fonction du profil aérodynamique (501, 502, 503, 504, 505).
